# EUROPÄISCHE PATENTSCHRIFT

(11) **EP 2 265 833 B1**
(45) Veröffentlichungstag und Bekanntmachung des Hinweises auf die Patenterteilung: **11.02.2015**
(21) Anmeldenummer: 09726850.2
(22) Anmeldetag: 27.03.2009
(51) Int. Cl.: F16C 29/06, F16C 29/12

(54) **UMLAUFFÜHRUNG FÜR WÄLZKÖRPER UND DAMIT AUSGERÜSTETE LINEAR-FÜHRUNGSEINHEIT**
CIRCUMFERENTIAL GUIDE FOR ROLLING BODIES, AND LINEAR GUIDE UNIT EQUIPPED THEREWITH
GUIDAGE AVEC RECIRCULATION POUR ÉLÉMENTS DE ROULEMENT ET UNITÉ DE GUIDAGE LINÉAIRE AINSI ÉQUIPÉE

(30) Priorität: 29.03.2008 DE 102008016356
(43) Veröffentlichungstag der Anmeldung: 29.12.2010
(73) Patentinhaber: Schaeffler Technologies GmbH & Co. KG, 91074 Herzogenaurach (DE)
(72) Erfinder: WINKLER, Thomas, 66280 Sulzbach (DE)
(86) Internationale Anmeldenummer: PCT/EP2009/002257
(87) Internationale Veröffentlichungsnummer: WO 2009/121526

(56) Entgegenhaltungen:
- EP-A1- 0 577 963
- WO-A1-99/25983
- DE-A1- 19 937 278
- DE-U1- 8 811 178
- GB-A- 2 103 731
- US-A1- 2001 014 278

## Beschreibung

### Gebiet der Erfindung

Die Erfindung betrifft eine Umlaufführung für Wälzkörper zum Einsatz in einer aus einem schlittenartigen Teil und einem schienenartigen Teil bestehenden Linear-Führungseinheit, mit - im bestimmungsgemäßen Betrieb - zwei belasteten und zwei unbelasteten Wälzkörperreihen, wobei die Umlaufführung als vormontierte Einheit ausgebildet ist und wenigstens ein Bauteil für die Wälzkörper enthält, welches Bestandteil eines Lagerkäfigs ist und zumindest zum Teil sowohl die - im bestimmungsgemäßen Betrieb - belasteten Wälzkörperreihen als auch die unbelasteten Wälzkörperreihen führt, wobei der Lagerkäfig ein weiteres Teil aufweist und das Bauteil zum Führen der belasteten und unbelasteten Wälzkörperreihen eine Führungsrinne und das weitere Teil eine Führungsrinne aufweisen, die sich zu einem röhrenförmigen Führungskanal ergänzen.

### Hintergrund der Erfindung

Umlaufführungen für Wälzkörper werden bekanntermaßen eingesetzt, wenn hoch belastbare und gleichermaßen hochpräzise lineare Führungen realisiert werden sollen. Dies kann beispielsweise bei Werkzeugmaschinen der Fall sein.

In der Regel weisen Umlaufführungen paarweise gegenüberliegende Wälzkörperreihen auf, wobei jeweils eine belastbare Wälzkörperreihe zwischen geeigneten Wälzkörper-Laufbahnen die Traglast zwischen einem feststehenden, schienenartigen Bauteil und einem hierzu bewegbaren schlittenartigen Bauteil aufnimmt, und die jeweils andere unbelastete Wälzkörperreihe die Funktion einer Rückführung der Wälzkörper in die belastete Wälzkörperreihe übernimmt. Am Ende der Wälzkörperreihen sind jeweils geeignete Umlenkmittel vorgesehen, die eine Überführung der Wälzkörper von einer zur anderen Wälzkörperreihe ermöglichen.

Um den Herstellungsaufwand und die Montage bzw. Demontage für eine Linear-Führungseinheit zu vereinfachen, ist aus der DE 33 13 129 eine Umlaufführung bekannt, die derart gestaltet ist, dass die belasteten und die unbelasteten Wälzkörperreihen jeweils durch separate Bauteile realisiert sind, die mittels eines drahtförmigen Halterungselementes zusammengehalten werden müssen.

Aus der DE 20 2006 005 762 U1 ist eine Umlaufführung bekannt, bei der zur Erzielung einer möglichst geringen Bauhöhe Umlenkführungen zur Umlenkung der Wälzkörper in die belasteten beziehungsweise unbelasteten Wälzkörperreihen derart gestaltet sind, dass die Umlenkebenen (d.h. die zwischen den Mittelpunkten der belasteten und den Mittelpunkten der unbelasteten Walzkörperreihen jeweils gebildeten Ebenen) zu der zwischen den Mittelpunkten der belasteten Wälzkörperreihen gebildeten Ebene in einem Winkel stehen, der kleiner als 90° ist.

Außerdem ist aus der DE 695 05 961 T2 eine Linear-Führungseinheit bekannt, bei der ein schlittenartiges Bauteil mittels einer Umlaufführung reibungsarm auf einem schienenartigen Bauteil geführt wird. Das schlittenartige Bauteil weist dabei eine Doppel-T-Träger-förmige Ausgestaltung mit zwei nach unten ragenden Schenkeln auf, die das schienenartige Bauteil teilweise umgreifen. Die belasteten Wälzkörperreihen sind dabei jeweils zwischen dem schienenartigen Bauteil und den Schenkeln des schlittenartigen Bauteils angeordnet. Die unbelasteten Wälzkörperreihen sind dagegen in eingearbeiteten Kanälen der Schenkel des schlittenartigen Bauteils angeordnet.

Aus der DE 199 37 278 A1 ist ein Linearwälzlager mit einer Käfighülse bekannt, welche in Umfangsrichtung insgesamt fünf gleiche Ausnehmungen aufweist. In jeder Ausnehmung ist ein Käfigsegmentgehäuse mit einem Tragbahnelement, einem inneren Käfigteil und einem in dieses eingesetzten äußeren Käfigteil zur Aufnahme von zwei endlosen Kugelumläufen angeordnet. Damit die Kugeln der Tragabschnitte und der Tragbahnelemente sich während der Abrollbewegung auf die Oberfläche und den Verlauf der von der Käfighülse umgebenen Führungsschiene einstellen können, muss bei diesem Lager jedes Käfgsegmentgehäuse in seiner Ausnehmung geringfügig schwenkbar eingehängt werden, wozu weitere konstruktive Maßnahmen erforderlich sind.

Aus der DE 88 11 178 U1 ist eine Wälzlagervorrichtung der eingangs genannten Art bekannt. Bei dieser sind mehrere endlose Reihen von kugeligen Wälzkörpern angeordnet, die in Kunststoffkäfigen jeweils zwischen einer Schiene und einem diese umgebenden Gehäuse bzw. Schlittenelement geführt sind, und zwar sind in jedem Käfig zwei endlose Reihen von Wälzkörpern angeordnet. Radial über bzw, an jeder Reihe von Wälzkörpern ist eine Tragplatte aus Stahl angeordnet, die eine auf einer zylindrischen Stützfläche des Gehäuses abgestützte Außenfläche besitzt. Die Außenfläche einer Tragplatte ist hier jeweils zylinderabschnittförmig konvex ausgebildet und der Stützfläche des Gehäuses formschlüssig angepasst, die ebenfalls zylindrisch ausgebildet sein muss. Außerdem sind, wie erwähnt, für ein Wälzlager mit zwei endlosen Reihen von Wälzkörpern auch zwei Tragplatten erforderlich.

### Aufgabe der Erfindung

Der Erfindung liegt die Aufgabe zugrunde, eine Umlaufführung bereitzustellen, die kompakt und stabil ist, eine selbstständige und vormontierbare Baueinheit bildet, eine vergleichsweise geringe Anzahl an Bauteilen benötigt und einen erhöhten Schutz vor Verschmutzung sowie gegebenenfalls vor Schmiermittelverlust aufweist, so dass eine Erhöhung der Gebrauchsdauer der Vorrichtung erreichbar ist. Diese Aufgabe wird durch eine Umlaufführung mit den Merkmalen des Anspruchs 1 gelöst.

Des Weiteren liegt der Erfindung die Aufgabe zugrunde, eine Linear-Führungseinheit vorzustellen, die leicht zu montieren bzw. zu demontieren ist und eine hohe Tragfähigkeit aufweist. Diese Aufgabe wird durch eine Linear-Führungseinheit mit den Merkmalen des Anspruchs 8 gelöst.

### Zusammenfassung der Erfindung

Der Erfindung liegt die Erkenntnis zugrunde, dass durch geschickte Ausbildung einer Umlaufführung deren Kompaktheit, Stabilität und Teilebedarf positiv beeinflusst werden kann, und dass sich eine Nutzung einer solchen Umlaufführung in einer Linear-Führungseinheit positiv auf deren Tragfähigkeits-Eigenschaften auswirken kann sowie zur leichteren Montierbarkeit der Linear-Führungseinheit beiträgt.

Die Erfindung geht daher aus von einer Umlaufführung der eingangs genannten Art. Erfindungsgemäß ist vorgesehen, dass das weitere Teil etwa im Bereich einer Mittellinie der Umlaufführung ein Mittelteil aufweist, wobei zwischen dem Mittelteil und dem Bauteil zum Führen der belasteten und unbelasteten Wälzkörperreihen zwei Führungskanäle für die belasteten Wälzkörper ausgebildet sind, wobei an dem Bauteil zum Führen der belasteten und unbelasteten Wälzkörperreihen ein längliches, plattenförmiges Bauteil befestigt ist, welches zwei Wälzkörperlaufbahnen enthält und wenigstens zwei Kontaktflächen aufweist, die mit Kontaktflächen des schlittenartigen Teils der Linear-Führungseinheit in Wirkkontakt bringbar sind.

Durch diesen Aufbau wird erreicht, dass der Teilebedarf für die Umlaufführung gering gehalten werden kann, was zu einer Reduzierung der Herstellungskosten führt. Zusätzlich wird durch diese Maßnahme eine kompakte und stabile Form der Umlaufführung ermöglicht.

Es ist also vorgesehen, dass das genannte Bauteil ein Bestandteil eines Wälzkörperlagerkäfigs ist oder diesen im Wesentlichen bildet. Hierdurch wird eine Doppelfunktion des Bauteils realisiert, was natürlich zu einer weiteren Reduzierung von an sich notwendigen Bauteilen führt.

Das Bauteil weist rinnen- bzw. röhrenartige Bestandteile auf, was besonders von Vorteil ist, wenn kugelförmige Wälzkörper eingesetzt werden.

Die Unteransprüche beschreiben bevorzugte Weiterbildungen oder Ausgestaltungen der Erfindung.

Gemäß einer ersten Weiterbildung der Erfindung wird vorgeschlagen, dass durch die Mittelpunkte der beiden belasteten Wälzkörperreihen eine erste Ebene und durch die Mittelpunkte einer jeden belasteten Wälz-körperreihe und der dieser jeweils zugeordneten unbelasteten Wälzkörper-reihe jeweils eine weitere Ebene gebildet ist, wobei die erste Ebene mit den weiteren Ebenen jeweils einen bestimmten Winkel einschließt. Durch diesen Aufbau wird erreicht, dass die Umlaufführung im eingebauten Zustand nur wenig Platz benötigt bzw. deren Bauhöhe reduziert ist.

Es ist von Vorteil, wenn die zwischen der ersten Ebene und den weiteren Ebenen jeweils gebildeten Winkel in etwa gleich groß sind. Dies erleichtert zum einen eine Herstellung der Umlaufführung und führt zum anderen im Betrieb zu einem gleichmäßigeren Kraftfluss. Wenn dabei in höchst zweckmäßiger Weise vorgesehen ist, dass die Winkel kleiner als 90° sind, vorzugsweise zwischen 5° und 45° liegen, so gestattet dies eine besonders platzsparende Einbauweise der Umlaufführung.

Es ermöglicht eine leichtere Bestückung der Umlaufführung mit Wälzkörpern, wenn vorteilhafterweise zum Umlenken der Wälzkörper in den verschiedenen Wälzkörperbahnen deckelartige Bauteile vorgesehen sind. Zur Bestückung der Umlaufführung mit Wälzkörpern braucht ein deckelartiges Bauteil lediglich entfernt zu werden, damit die Umlaufführung beziehungsweise der Wälzkörperkäfig mit Wälzkörpern bestückt werden kann.

Bei einer weitern zweckmäßigen Weiterbildung der Erfindung ist vorgesehen, dass das längliche plattenförmige Bauteil, welches an dem oben erwähnten Bauteil befestigt ist und Wälzkörperlaufbahnen enthält, im Querschnitt eine gekrümmte bzw. abgewinkelte Gestalt aufweist. Es hat wenigstens zwei Kontaktflächen, die dazu geeignet sind, mit Kontaktflächen des schlittenartigen Teils einer Linear-Führungseinheit in Wirkkontakt gebracht zu werden. Durch diese konstruktiven Maßnahmen kann das plattenförmige Bauteil zur Stabilisierung der Umlenkführung beitragen und auch zur Aufnahme von Lagerkräften dienen. Weiterhin ist es dabei besonders vorteilhaft, wenn die Kontaktflächen des plattenförmigen Bauteils und die Kontaktflächen des schlittenartigen Teils jeweils in etwa rechtwinklig zueinander stehen, was zu einer guten Aufnahme von auch in unterschiedlichen Richtungen auftretenden Lagerkräften führt.

Zudem ist in zweckmäßiger Weise vorgesehen, dass das oben genannte Bauteil für die Wälzkörper, welches Bestandteil eines Lagerkäfigs ist und zumindest zum Teil sowohl die belasteten Wälzkörperreihen als auch die unbelasteten Wälzkörperreihen führt, Dichtmittel zur Anlage an dem schienenartigen Teil einer Linear-Führungseinheit aufweist, was zu einem erhöhten Schutz der Umlaufführung vor Verschmutzung sowie gegebenenfalls vor Schmiermittelverlust führt und damit zu einer Erhöhung der Gebrauchsdauer der Vorrichtung beiträgt.

Vorzugsweise sind die Wälzkörper kugelförmig ausgebildet, was gegenüber anderen Wälzkörperformen eine noch kompaktere Bauform und auch eine leichtere Herstellung ermöglicht.

Eine Linear-Führungseinheit mit einem schlittenartigen Teil und einem schienenartigen Teil sollte wenigstens eine erfindungsgemäße Umlaufführung enthalten, um Montagevorteile zu erzielen. Besonders vorteilhaft sollte diese Linear-Führungseinheit wenigstens zwei erfindungsgemäße Umlaufführungen enthalten, um die Vorteile der erfindungsgemäßen Umlaufführung möglichst optimal zu nutzen. So sollte an jeder Seite des schienenartigen Teils wenigstens eine erfindungsgemäße Umlaufführung angeordnet sein. Es ist auch möglich, mehr als zwei erfindungsgemäße Umlaufführungen anzuordnen, nämlich wenn eine entsprechend lange Linear-Führungseinheit realisiert werden soll.

Es kann vorteilhafterweise vorgesehen sein, dass die Umlaufführungen derart angeordnet sind, dass sich eine X-Anordnung der Drucklinien der unter Belastung stehenden Wälzkörperreihen ergibt. Hierdurch wird ermöglicht, dass die Umlaufführung nur wenig Bauraum in dem schlittenartigen Teil beansprucht und dieses besonders steif ausgebildet werden kann.

Ferner ist es zweckmäßig, wenn sowohl das schienenartige Teil als auch das schlittenartige Teil Ausnehmungen aufweisen, in die das Bauteil zur Aufnahme der Wälzkörper zumindest teilweise hineinragt.

Um eine Vorspannung der Linear-Führungseinheit zu ermöglichen, sollten zweckmäßigerweise Mittel zur Einstellung einer Vorspannung vorgesehen sein. Diese Einstellmittel können sehr vorteilhaft als wellenförmige Bauteile ausgebildet sein, die in nutenförmige Ausnehmungen des schlittenartigen Bauteils eindrückbar sind. Beispielsweise ist dann die Vorspannung einer Linear-Führungseinheit sehr komfortabel einstellbar, wenn das schlittenartige Teil mehrere in etwa senkrecht abstehende Schenkel aufweist, die das schienenartige Teil zumindest teilweise umgreifen, wobei zwischen dem schlittenartigen Teil und dem schienenartigen Teil die Umlaufführungen angeordnet sind, und wobei die nutenförmigen Ausnehmungen in die Schenkel eingearbeitet sind und einen sich verjüngenden Öffnungsquerschnitt aufweisen, derart, dass beim Eindrücken der wellenförmigen Bauteile in die nutenförmigen Ausnehmungen jeweils ein Teil der Schenkel eine die Vorspannung erhöhende Auslenkung erfährt.

Alternativ dazu kann eine komfortable Vorspannungseinstellung aber auch dadurch sehr vorteilhaft realisiert werden, dass die Mittel zur Einstellung der Vorspannung als Senkschrauben ausgebildet sind, wobei das schlittenartige Teil mehrere in etwa senkrecht abstehende Schenkel aufweist, die das schienenartige Teil zumindest teilweise umgreifen, wobei zwischen dem schlittenartigen Teil und dem schienenartigen Teil die Umlaufführungen angeordnet sind und wobei Längsschlitze in die Schenkel eingearbeitet sind, in deren Bereich Senkbohrungen eingearbeitet sind, derart, dass bei Einschrauben der Senkschrauben in die Senkbohrungen jeweils ein Teil der Schenkel eine die Vorspannung erhöhende Auslenkung erfährt.

### Kurze Beschreibung der Zeichnungen

Die Erfindung wird im Folgenden anhand der beiliegenden Zeichnungen an Ausführungsbeispielen näher erläutert. Darin zeigt
- Fig. 1: ein Ausführungsbeispiel für eine erfindungsgemäße Umlaufführung in einer Schnittdarstellung,
- Fig. 2: ein Ausführungsbeispiel für eine ähnliche, jedoch nicht erfindungsgemäße Umlaufführung in einer perspektivischen Explosionsdarstellung ohne Wälzkörper,
- Fig. 3: eine Linear-Führungseinheit mit eingebauten erfindungsgemäßen Umlaufführungen, in einer Querschnittansicht,
- Fig. 4: ein Ausführungsbeispiel einer in ein schlittenartiges Teil montierten, nicht erfindungsgemäßen Umlaufführung in einer Querschnittsansicht,
- Fig. 5: eine Darstellung einer Linear-Führungseinheit gemäß dem Schnittverlauf V-V in Fig. 3, jedoch ohne ein schienenartiges Teil.
- Fig. 6: eine perspektivische Darstellung der Linear-Führungseinheit gemäß Fig. 5 mit einem schienenartigen Teil, wobei die Umlaufführungen nicht sichtbar sind,
- Fig. 7: eine Darstellung einer verlängerten Linear-Führungseinheit, vergleichbar mit Fig. 5, wobei zwei Umlaufführungen hintereinander montiert sind,
- Fig. 8: eine Querschnitts-Darstellung einer alternativen Linear-Führungseinheit, welche als Drehmomenten-Kugelbuchse ausgeführt ist und zwei erfindungsgemäße Umlaufführungen enthält,
- Fig. 9: eine Querschnitts-Darstellung einer weiteren alternativen Linear-Führungseinheit in Form einer angetriebenen Linearachse,
- Fig. 10: eine Darstellung einer abgewandelten Linear-Führungseinheit gemäß Fig. 3, wobei zusätzliche Mittel zum Einstellen der Vorspannung vorgesehen sind,
- Fig. 11: eine Detail-Darstellung der Einstell-Mittel gemäß Fig. 10,
- Fig. 12: eine Darstellung ähnlich Fig. 10, wobei aus Symmetriegründen nur eine Seite der Führungseinheit dargestellt ist, mit abgewandelten Mitteln zum Einstellen der Vorspannung.

### Detaillierte Beschreibung der Zeichnungen

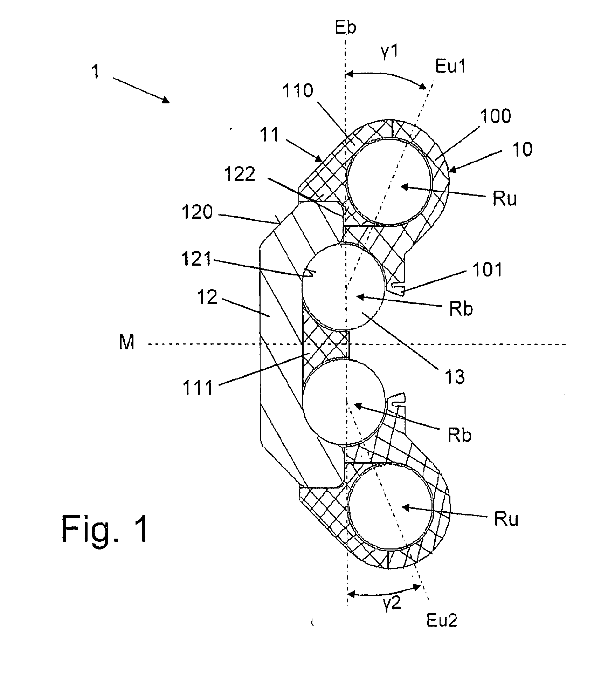

Zunächst wird auf die Fig. 1 Bezug genommen, in der eine erfindungsgemäße Umlaufführung 1 dargestellt ist. Die Umlaufführung 1 ist symmetrisch zu einer gedachten Mittellinie M aufgebaut und weist einen aus mehreren Teilen 10, 11 bestehenden Wälzkörperkäfig auf. Das Teil 10 des Wälzkörperkäfigs hat eine Führungsrinne 100, in der kugelförmige Wälzkörper 13 geführt sind. Ebenso weist das Teil 11 des Wälzkörperkäfigs eine Führungsrinne 110 auf, die zum Führen der Wälzkörper 13 dient. Die beiden Führungsrinnen 100 und 110 ergänzen sich dabei zu einem röhrenförmigen Führungskanal.

Ferner ist ersichtlich, dass das Teil 11 ein Mittelteil 111 etwa im Bereich der Mittellinie M aufweist, wobei zwischen dem Mittelteil 111 und dem Teil 10 ebenso ein Führungskanal für die Wälzkörper 13 ausgebildet ist. Zu diesem Zweck weisen das Teil 10 und das Mittelteil 111 in diesen Bereichen entsprechend gestaltete, nicht näher bezeichnete konkave Flächen auf.

Die in den Teilen 10 und 11 des Wälzkörperkäfigs geführten Wälzkörper 13 bilden hinsichtlich ihrer einwirkenden Last unbelastete Wälzkörperreihen Ru und belastete Wälzkörperreihen Rb, wobei jeweils einer belasteten Wälzkörperreihe Rb eine unbelastete Wälzkörperreihe Ru zugeordnet ist. Die Wälzkörper 13 der unbelasteten Wälzkörperreihen Ru werden der jeweiligen belasteten Wälzkörperreihe Rb wieder zugeführt und umgekehrt. Wie ferner ersichtlich ist, wird durch die Mittelpunkte der belasteten Wälzkörperreihen Rb eine Ebene Eb gebildet sowie durch die Mittelpunkte der belasteten Wälzkörperreihen Rb und die Mittelpunkte der diesen jeweils zugeordneten unbelasteten Wälzkörperreihen Ru zwei Ebenen Eu1 bzw. Eu2, wobei diese Ebenen Eb und Eu1 bzw. Eu2 jeweils einen bevorzugten Winkel y1 bzw. y2 miteinander einschließen. Aufgrund der bereits erwähnten Symmetrie der Umlaufführung 1 sind die gebildeten Winkel y1 und y2 natürlich gleich, können aber bei fehlender Symmetrie auch voneinander abweichen.

Des Weiteren ist in Fig. 1 erkennbar, dass eine im Querschnitt in etwa C-förmig gebogene bzw. abgewinkelte Tragplatte 12 mit Kontaktflächen 120 vorhanden ist, die in etwa rechtwinklig zueinander ausgerichtet sind. Ferner ist die Tragplatte 12 mit konkaven Lagerlaufflächen 121 für die Wälzkörper 13 ausgestattet und weist an ihren im Querschnitt betrachtet abgewinkelten Enden in etwa rechtwinklig zueinander stehende Montageflächen 122 auf, die in entsprechende Ausnehmungen des Wälzkörperkäfigs (Teil 11) eingreifen.

Um eine Dichtigkeit der Umlaufführung zu gewährleisten, sind an dem Teil 10 des Wälzkörperkäfigs Dichtungslippen 101 vorgesehen bzw. angeformt. Die Tragplatte 12 ist vorzugsweise aus einem hochfesten Material, wie beispielsweise Stahl hergestellt, während die Teile 10 und 11 des Wölzkörperkäfigs vorzugsweise aus Kunststoff gefertigt sind.

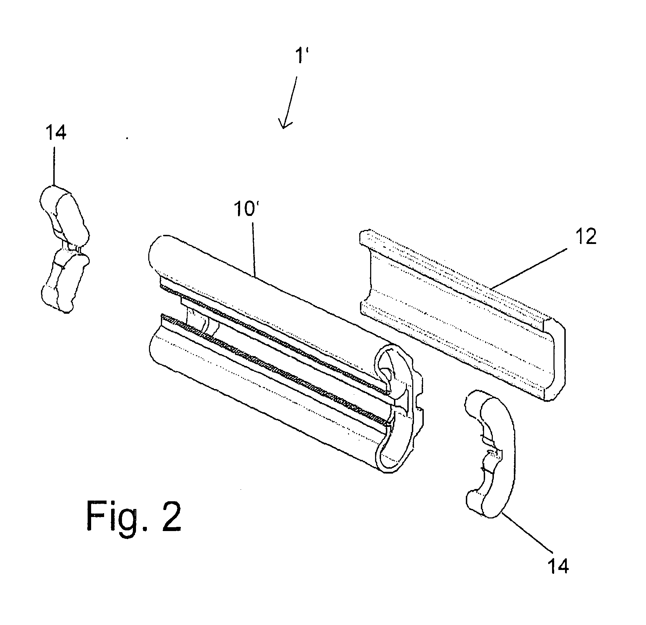

Fig. 2 zeigt eine zur Fig. 1 alternative Umlaufführung 1', bestehend aus einem Wälzkörperkäfig 10', welcher zwei demontierbare Käfigdeckel 14 aufweist. Die Käfigdeckel 14 werden stirnseitig in den Wälzkörperkäfig 10' gedrückt und weisen entsprechend geeignete, nicht näher sichtbare Umlenkbahnen für die Wälzkörper 13 auf, damit ein Umlenken zwischen den Wälzkörperreihen Ru, Rb gewährleistet ist (derartige Käfigdeckel werden natürlich auch in der Umlaufführung 1 eingesetzt, sie sind jedoch nicht dargestellt worden). Ferner ist wiederum eine Tragplatte 12, wie in Fig. 1 bereits näher beschrieben, vorgesehen. Im Unterschied zur Umlaufführung 1 ist der Wälzkörperkäfig 10' der Umlaufführung 1' einteilig ausgeführt, so dass diese Umlaufführung 1' nicht erfindungsgemäß ist. Der Wälzkörperkäfig 10' weist röhrenförmige Bestandteile auf, in denen die Wälzkörperreihen Ru, Rb geführt werden. In Fig. 2 sind keine Wälzkörper dargestellt.

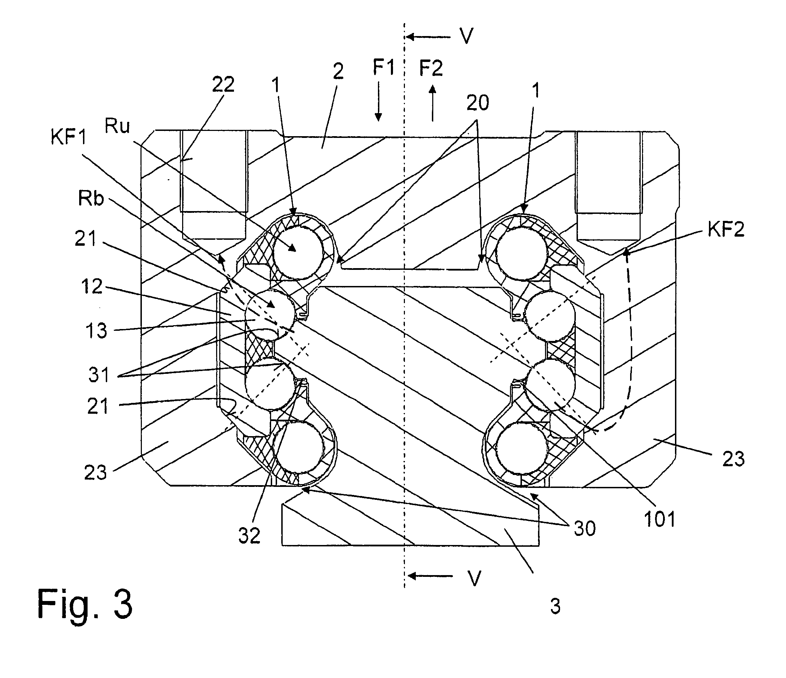

In Fig. 3 ist nun eine Linear-Führungseinheit mit montierten erfindungsgemäßen Umlaufführungen 1 ersichtlich. Die Linear-Führungseinheit besteht aus einem Führungsschlitten 2, welcher längsverschieblich auf einer Führungsschiene 3 gehalten ist. Der Führungsschlitten 2 weist in etwa die Form eines auf dem Kopf stehenden U mit zwei nach unten ragenden Schenkeln 23 auf, welche die Führungsschiene 3 beidseitig überragen beziehungsweise umgreifen. Zwischen dem Führungsschlitten 2 und der Führungsschiene 3 sind jeweils die erfindungsgemäßen Umlaufführungen 1 angeordnet.

Dabei weisen der Führungsschlitten 2 Ausnehmungen 20 und die Führungsschiene 3 Ausnehmungen 30 für den Wälzkörperkäfig der Umlaufführungen 1 auf. Man kann erkennen, dass der Wälzkörperkäfig lediglich unter Wahrung eines Abstands in die Ausnehmungen 20 beziehungsweise 30 hineinragt, jedoch dort keinen Kontakt mit dem Führungsschlitten 2 beziehungsweise mit der Führungsschiene 1 hat.

Ferner weist die Führungsschiene 3 Lagerlaufflächen 31 für die Wälzkörper 13 und Dichtflächen 32 zum Anliegen der Dichtungslippen 101 auf. Die Schenkel 23 des Führungsschlittens 2 sind mit in etwa rechtwinklig zueinander stehenden Kontaktflächen 21 versehen, die mit den in Fig. 1 beschriebenen Kontaktflächen 120 der Tragplatte 12 zusammenwirken. Durch die in etwa rechtwinklige Ausrichtung der Kontaktflächen 120 beziehungsweise 21 ist eine gute Aufnahme von auf den Führungsschlitten 2 wirkenden Druckkräften F1 beziehungsweise Zugkräften F2 möglich. Die bei Zug- beziehungsweise Druckkraft in etwa wirkenden Kraftlinien KF2 bzw. KF1 sind durch gestrichelte Pfeile angedeutet. Es ist daher nachvollziehbar, dass durch den fehlenden Kontakt zwischen den Wälzkörperkäfigen und den bereits erwähnten Ausnehmungen 20 beziehungsweise 30 die Traglasten F1 bzw. F2 ausschließlich über die Tragplatte 12 der Umlaufführungen 1 weitergeleitet werden. An den gestrichelt angedeuteten Drucklinien ist ersichtlich, dass die Umlaufführungen 1 derart montiert sind, dass sich eine X-Anordnung der Drucklinien ergibt. Schließlich sind noch Sackbohrungen 22 erwähnenswert, mittels derer translatorisch zu bewegende Bauteile an dem Führungsschlitten 2 angebracht werden können.

Die Nutzung der Tragplatte 12 bietet zudem den Vorteil, dass in dem Führungsschlitten 2 bzw. in dessen Schenkeln 23 keine aufwendig zu bearbeitenden Lagerlaufflächen vorgesehen sein müssen. Bei beschädigten Lagerlaufflächen 121 beispielsweise reicht ein einfaches Austauschen der als vormontierte Baueinheit ausgeführten Umlaufführung 1.

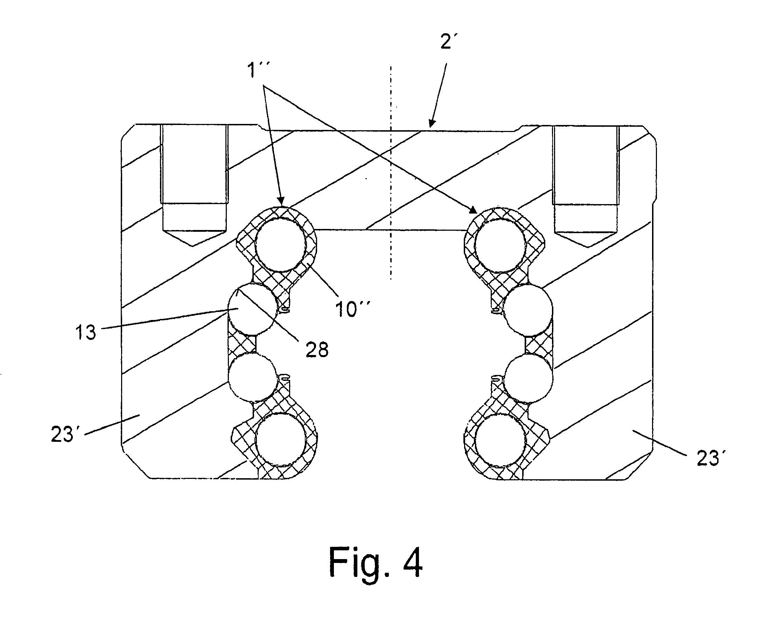

Fig. 4 zeigt einen alternativ ausgeführten Führungsschlitten 2', bei dem ebenso alternativ ausgeführte Umlaufführungen 1" benutzt werden. Die Umlaufführungen 1" sind mit ihren Wälzkörperkäfigen 10" direkt in entsprechende, nicht näher bezifferte Ausnehmen des Führungsschlittens 2' eingesetzt, wobei der Führungsschlitten 2' nunmehr Schenkel 23' mit eingearbeiteten Lagerlaufflächen 28 aufweist. Durch den dadurch möglichen Verzicht auf eine Tragplatte als längliches plattenförmiges Bauteil ist diese Ausführung nicht erfindungsgemäß. Es kommt hier jedoch zu einer Erhöhung der Steifigkeit des Linear-Führungssystems. Das Material des Führungsschlittens 2' ist dabei vorzugsweise ein härtbarer Stahl, wobei die Lagerlaufflächen 28 nach der Wärmebehandlung feinbearbeitet wurden, um eine hinreichende Laufgenauigkeit und Verschleißfestigkeit realisieren zu können. Auch hier sind die Umlaufführungen 1" wieder als vormontierte Baueinheiten ausgeführt.

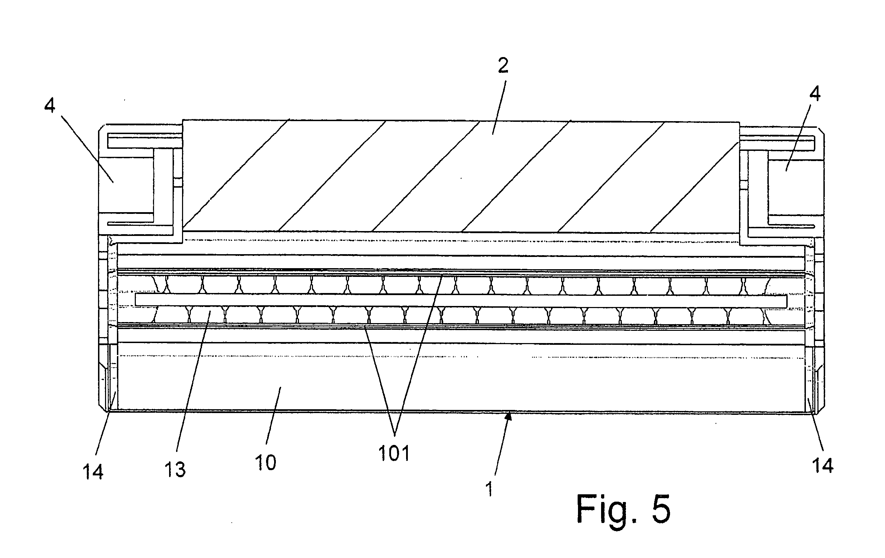

In Fig. 5 ist eine Ansicht der Linear-Führungseinheit gemäß dem Schnittverlauf V-V in Fig. 3 gezeigt, wobei jedoch die Führungsschiene 3 weggelassen wurde. Hierbei ist die in den Führungsschlitten 2 eingebaute Umlaufführung 1 mit dem Teil 10 des Wälzkörperkäfigs, den Dichtungslippen 101 sowie den Wälzkör.pern 13 ersichtlich. Ferner sind die in den Wälzkörperkäfig stirnseitig eingesteckten Deckel 14 zu erkennen bzw. sind gestrichelt angedeutet, welche die stirnseitige Abdeckung und Umlenkung der Wälzkörper 13 zur Aufgabe haben. Weiterhin ist an den beiden Stirnseiten des Führungsschlittens 2 jeweils eine Endplatte 4 zu erkennen, welche zur Abdeckung und Sicherung der Umlaufführung 1 im Führungsschlitten 2 dient.

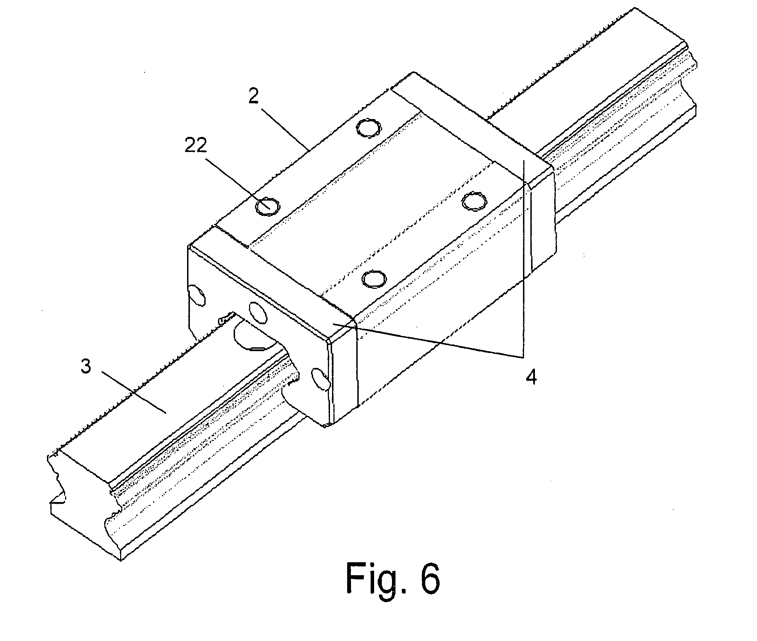

Fig. 6 zeigt eine perspektivische Darstellung der Linear-Führungseinheit gemäß Fig. 3, wobei lediglich der Führungsschlitten 2 mit den Endplatten 4 sowie die Führungsschiene 3 dargestellt ist. Ferner sind die weiter oben genannten Sackbohrungen 22 gut zu erkennen.

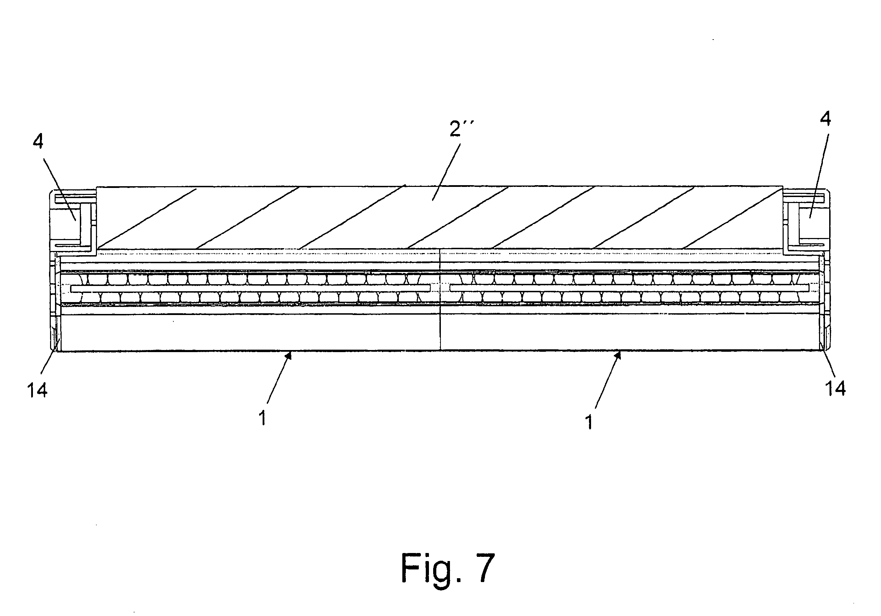

Die Fig. 7 zeigt eine Darstellung einer weiteren alternativen Linear-Führungseinheit mit einem axial verlängerten Führungsschlitten 2", wobei im Unterschied zur Linear-Führungseinheit der Fig. 5 zwei Umlaufführungen 1 axial hintereinander montiert sind, welches die Verlängerung der Linear-Führungseinheit ermöglicht. Es ist natürlich auch die Montage von mehr als zwei Umlaufführungen 1 realisierbar.

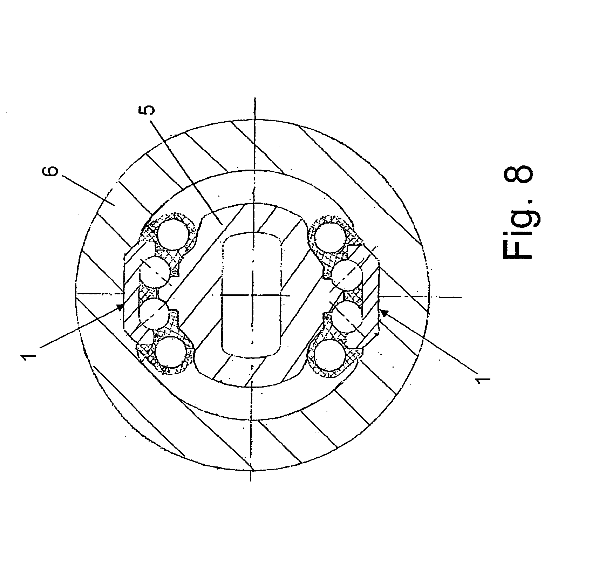

In Fig. 8 ist nun eine weitere, alternative Ausführungsform für eine Linear-Führungseinheit gezeigt, nämlich eine Drehmomenten-Kugelbuchse mit einer als Führungsschiene dienenden Profilwelle 5 und einer als Führungsschlitten dienenden Kugelbuchse 6. Zwischen der Profilwelle 5 und der Kugelbuchse 6 sind zwei erfindungsgemäße Umlaufführungen 1 in einer X-Anordnung montiert.

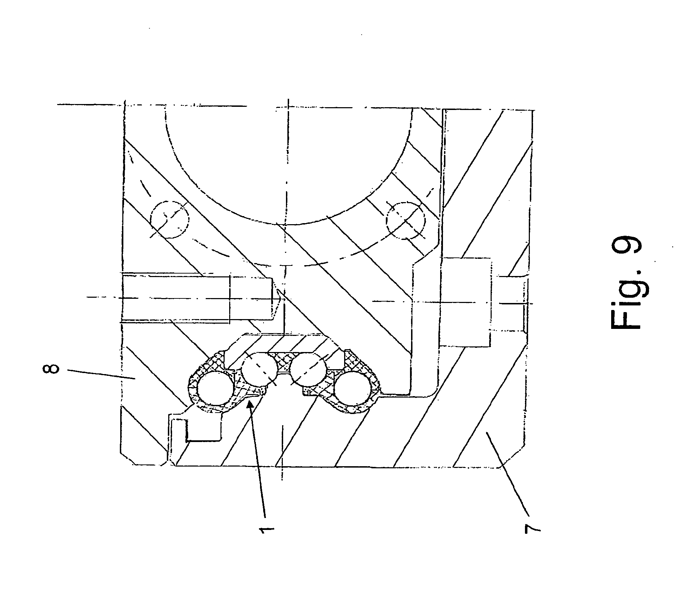

Fig. 9 zeigt eine weitere Ausführungsform für eine Linear-Führungseinheit gemäß der Erfindung, in Form einer antreibbaren Linearachse 8, welche mittels erfindungsgemäß ausgebildeten Umlaufführungen 1 (es ist nur eine Querschnittseite der Linear-Führungseinheit dargestellt) auf einer als U-Profilartigen Führungsschiene 7 geführt ist.

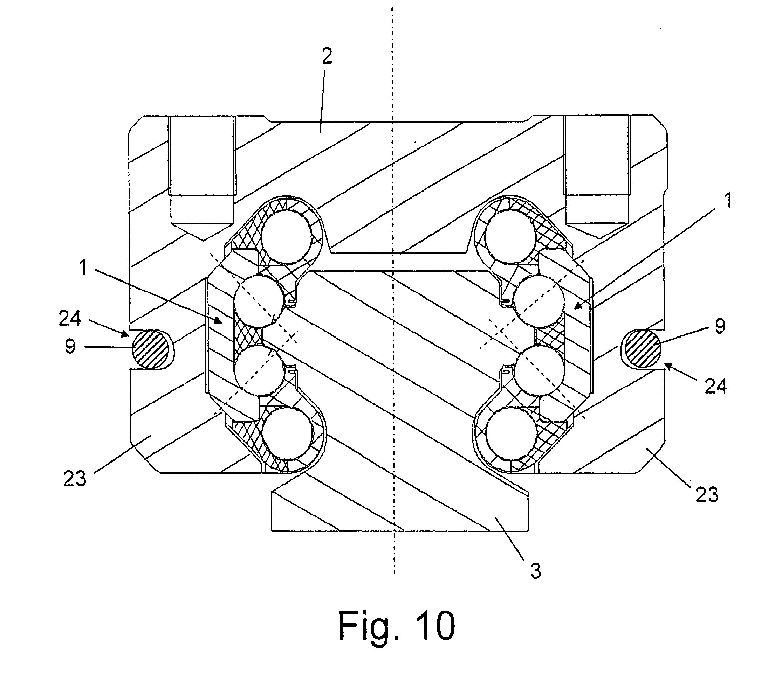

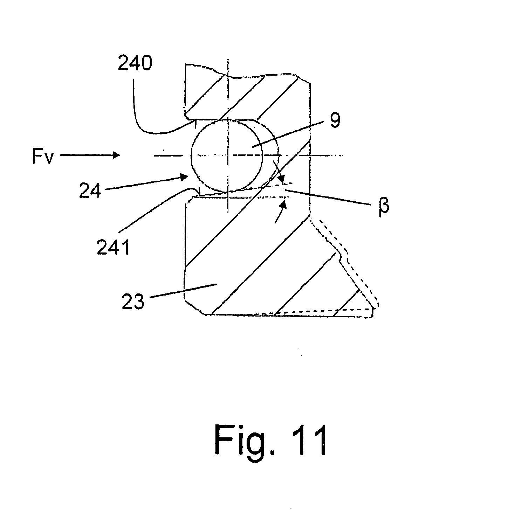

Fig. 10 zeigt eine Darstellung, die mit Fig. 3 vergleichbar ist, wobei Wellen 9 in Längsnuten 24 der Schenkel 23 des Führungsschlittens 2 zur Erzielung einer Vorspannung eingedrückt werden. Fig. 11 zeigt in einer Detaildarstellung die Aufbringung und Wirkung einer Vorspannkraft Fv. Es ist ersichtlich, dass die Nut 24 eine obere, in etwa horizontal ausgerichtete Wand 240 und eine untere, unter einem Anstellwinkel β geneigte Wand 241 aufweist. Sobald die Welle 9 mit einer Vorspannkraft Fv (siehe Pfeil) in die Nut 24 eingedrückt wird, wird diese Nut 24 gespreizt und der untere Teil des Schenkels 23 leicht nach innen angewinkelt, so dass er die gestrichelt angedeutete Position einnimmt und die Wälzkörper 13 der belasteten Wälzkörperreihen Rb unter Vorspannung gehalten werden.

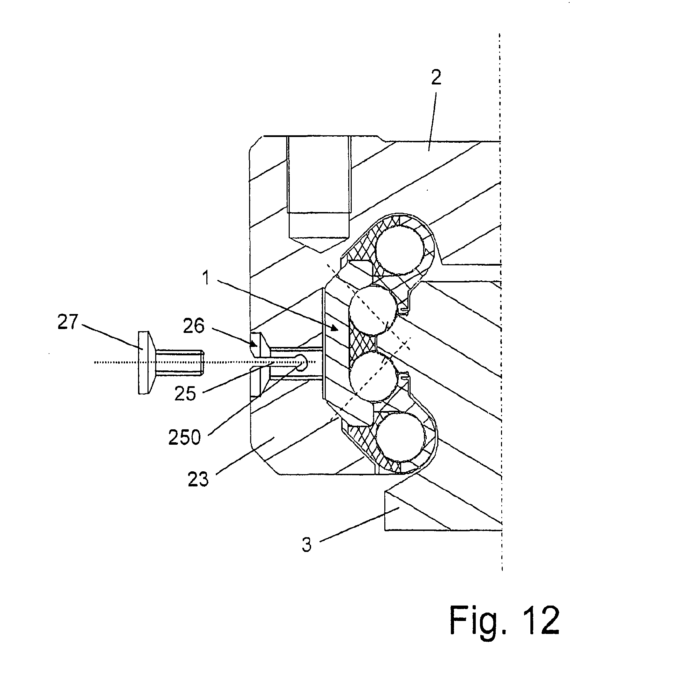

Schließlich ist in Fig. 12 eine dazu alternative Möglichkeit zur Erzeugung einer Vorspannung mittels Senkschrauben 27 dargestellt. Hierbei sind die Schenkel 23 des Führungsschlittens 2 jeweils mit einem durchgehenden Längsschlitz 25 versehen, der radial innen in eine Längsbohrung 250 übergeht. Entlang der Längsschlitze 25 sind vorzugsweise mehrere in gleichmäßigen Abständen verteilte Senkbohrungen 26 angeordnet. Werden nun die Senkschrauben 27 in die Senkbohrungen 26 eingeschraubt, so wird der Längsschlitz 25 aufgespreizt und der untere Teil des Schenkels 23 vollführt eine ähnliche Auslenkung wie bereits im Zusammenhang mit dem in Fig. 10 dargestellten Ausführungsbeispiel beschrieben wurde.

### Bezugszeichenliste

- 1, 1', 1": Umlaufführung
- 10, 10', 10": Teil vom Wälzkörperkäfig
- 100: Führungsrinne
- 101: Dichtungslippe
- 11: Teil vom Wälzkörperkäfig
- 110: Führungsrinne
- 111: Mittelteil vom Teil 11
- 12: Tragplatte
- 120: Kontaktflächen der Tragplatte
- 121: Lagerlaufflächen der Tragplatte
- 122: Montageflächen der Tragplatte
- 13: kugelförmige Wälzkörper
- 14: Deckel vom Wälzkörperkäfig
- 2, 2', 2": Führungsschlitten, schlittenartiges Teil
- 20: Ausnehmungen für den Wälzkörperkäfig
- 21: Kontaktflächen des Führungsschlittens
- 22: Sackbohrung
- 23, 23': Schenkel des Führungsschlittens
- 24: Nuten in den Schenkeln des Führungsschlittens
- 240: Obere Wand der Nut
- 241: Untere Wand der Nut
- 25: Längsschlitz
- 250: Längsbohrung
- 26: Senkbohrung
- 27: Senkschraube
- 28: Lagerlauffläche des Führungsschlittens
- 3: Führungsschiene, schienenartiges Teil
- 30: Ausnehmungen der Führungsschiene
- 31: Lagerlaufflächen der Führungsschiene
- 32: Dichtflächen der Führungsschiene
- 4: Endplatte
- 5: Profilwelle
- 6: Kugelbuchse
- 7: U-Profilartige Führungsschiene
- 8: Linearachse
- 9: Wellen
- α: Winkel zwischen den Ebenen der Wälzkörperreihen
- β: Anstellwinkel
- γ1,2: Winkel zwischen den Ebenen Eb und Eu
- Eb: Durch die Mittelpunkte der belasteten Wälzkörperreihen gebildete Ebene
- Eu1,2: Durch die Mittelpunkte der belasteten und der jeweils zugeordneten unbelasteten Wälzkörperreihen gebildete Ebene
- F1: Auf den Führungsschlitten wirkende Druckkraft
- F2: Auf den Führungsschlitten wirkende Zugkraft
- Fv: Vorspannkraft
- KF1: Kraftlinien bei Druckkraft
- KF2: Kraftlinien bei Zugkraft
- M: Mittellinie
- Rb: Belastete Wälzkörperreihen
- Ru: Unbelastete Wälzkörperreihen

## Patentansprüche

1. Umlaufführung (1) für Wälzkörper (13) zum Einsatz in einer aus einem schlittenartigen Teil (2, 6, 8) und einem schienenartigen Teil (3, 5, 7) bestehenden Linear-Führungseinheit, mit - im bestimmungsgemäßen Betrieb - zwei belasteten (Rb) und zwei unbelasteten (Ru) Wälzkörperreihen, wobei die Umlaufführung (1) als vormontierte Einheit ausgebildet ist und wenigstens ein Bauteil (10) für die Wälzkörper (13) enthält, welches Bestandteil eines Lagerkäfigs ist und zumindest zum Teil sowohl die - im bestimmungsgemäßen Betrieb - belasteten Wälzkörperreihen (Rb) als auch die unbelasteten Wälzkörperreihen (Ru) führt, wobei der Lagerkäfig ein weiteres Teil (11) aufweist und das Bauteil (10) zum Führen der belasteten und unbelasteten Wälzkörperreihen (Rb, Ru) eine Führungsrinne (100) und das weitere Teil (11) eine Führungsrinne (110) aufweisen, die sich zu einem röhrenförmigen Führungskanal ergänzen, **dadurch gekennzeichnet, dass** das weitere Teil (11) etwa im Bereich einer Mittellinie (M) der Umlaufführung (1) ein Mittelteil (111) aufweist, wobei zwischen dem Mittelteil (111) und dem Bauteil (10) zum Führen der belasteten und unbelasteten Wälzkörperreihen (Rb, Ru) zwei Führungskanäle für die belasteten Wälzkörper (13) ausgebildet sind, wobei an dem Bauteil (10) zum Führen der belasteten und unbelasteten Wälzkörperreihen (Rb, Ru) ein längliches, plattenförmiges Bauteil (12) befestigt ist, welches zwei Wälzkörperlaufbahnen (121) enthält und wenigstens zwei Kontaktflächen (120) aufweist, die mit Kontaktflächen (21) des schlittenartigen Teils (2, 6, 8) der Linear-Führungseinheit in Wirkkontakt bringbar sind, und wobei das Bauteil (10) zum Führen der belasteten und unbelasteten Wälzkörperreihen (Rb, Ru) Dichtmittel (101) zur Anlage an dem schienenartigen Teil (3) der Linear-Führungseinheit aufweist.

2. Umlaufführung nach Anspruch 1, **dadurch gekennzeichnet, dass** durch die Mittelpunkte der beiden belasteten Wälzkörperreihen (Rb) eine erste Ebene (Eb) und durch die Mittelpunkte einer jeden belasteten Wälzkörperreihe (Rb) und der dieser jeweils zugeordneten unbelasteten Wälzkörperreihe (Ru) jeweils eine weitere Ebene (Eu1; Eu2) gebildet ist, wobei die erste Ebene (Eb) mit den weiteren Ebenen (Eu1, Eu2) jeweils einen bestimmten Winkel (y1, y2) einschließt.

3. Umlaufführung nach Anspruch 2, **dadurch gekennzeichnet, dass** die zwischen der ersten Ebene (Eb) und der zweiten Ebene (Eu1; Eu2) jeweils gebildeten Winkel (y1; y2) in etwa gleich sind.

4. Umlaufführung nach Anspruch 2, **dadurch gekennzeichnet, dass** die Winkel (y1, y2) kleiner als 90° sind, vorzugsweise zwischen 5° und 45° liegen.

5. Umlaufführung nach Anspruch 2, **dadurch gekennzeichnet, dass** zum Umlenken der Wälzkörper in den verschiedenen Wälzkörperbahnen (Rb bzw. Ru) deckelartige Bauteile (14) vorgesehen sind.

6. Umlaufführung nach Anspruch 1, **dadurch gekennzeichnet, dass** das plattenförmige Bauteil (12) im Querschnitt eine gekrümmte bzw. abgewinkelte Gestalt aufweist.

7. Umlaufführung nach Anspruch 1, **dadurch gekennzeichnet, dass** die Kontaktflächen (120) des plattenförmigen Bauteils (12) und die Kontaktflächen (21) des schlittenartigen Teils (2) jeweils in etwa rechtwinklig zueinander stehen.

8. Linear-Führungseinheit mit einem schlittenartigen Bauteil (2) und einem schienenartigen Bauteil (3) sowie mit Umlaufführungen (1) für Wälzkörper (13) nach Anspruch 1, **dadurch gekennzeichnet, dass** das schlittenartige Bauteil (2) mehrere in etwa senkrecht abstehende Schenkel (23) aufweist, die das schienenartige Bauteil (3) zumindest teilweise umgreifen, wozu zwischen dem schlittenartigen Bauteil (2) und dem schienenartigen Bauteil (3) die Umlaufführungen (1) angeordnet sind, und wobei zur Einstellung einer Vorspannung wellenförmige Bauteile (9) in nutenförmige Ausnehmungen (24) des schlittenartigen Bauteils (2) in dessen Schenkel (23) eindrückbar sind und die Ausnehmungen (24) einen sich verjüngenden Öffnungsquerschnitt aufweisen, derart, dass beim Eindrücken der wellenförmigen Bauteile (9) in die nutenförmigen Ausnehmungen (24) jeweils ein Teil der Schenkel (23) eine die Vorspannung erhöhende Auslenkung erfährt.

9. Linear-Führungseinheit nach Anspruch 8. **dadurch gekennzeichnet, dass** sowohl das schlittenartige Bauteil (2) als auch das schienenartige Bauteil (3) Ausnehmungen (20 bzw, 30) aufweist, in die das Bauteil (10) der jeweiligen Umlaufführung (1) für die Wälzkörper (13) zumindest teilweise hineinragt.

## Claims

1. Recirculating element guide (1) for rolling elements (13) for use in a linear guide unit consisting of a carriage-type part (2, 6, 8) and a rail-type part (3, 5, 7), having two loaded rolling element rows (Rb) and two unloaded rolling element rows (Ru) during operation as intended, the recirculating element guide (1) being designed as a preassembled unit and containing at least one component (10) for the rolling elements (13) which is part of a bearing cage and at least partially guides both the rolling element rows (Rb) which are loaded during operation as intended and the unloaded rolling element rows (Ru), the bearing cage and having a further part (11), and the component (10) for guiding the loaded and unloaded rolling element rows (Rb, Ru) having a guide groove (100) and the further part (11) having a guide groove (110), which guide grooves (100, 110) combine to form a tubular guide chancel, **characterized in that** the further part (11) has a centre part (111) approximately in the region of a centre line (M) of the recirculating element guide (1), two guide channels for the loaded rolling bodies (13) being formed between the centre part (111) and the component (10) for guiding the loaded and unloaded rolling element rows (Rb, Ru), an elongate plate-shaped component (12) being secured on the component (10) for guiding the loaded and unloaded rolling element rows (Rb, Ru), which plate-shaped component contains two rolling element raceways (121) and has at least two contact surfaces (120), which can be brought into effective contact with contact surfaces (21) on the carriage-type part (2, 6, 8) of the linear guide unit and the component (10) for guiding the loaded and unloaded rolling element rows (Rb, Ru) having sealing means (101) for contact with the rail-type part (3) of the linear guide unit.

2. Recirculating element guide according to Claim 1, **characterized in that** a first plane (Eb) is formed by the centres of the two loaded rolling element rows (Rb), and a further plane (Eu1; Eu2) in each case is formed by the centres of each loaded rolling element row (Rb) and the unloaded rolling element row (Ru) respectively associated therewith, the first plane (Eb) in each case enclosing a particular angle (y1; y2) with the further planes (Eu1, Eu2).

3. Recirculating element guide according to Claim 2, **characterized in that** the angles (y1; y2) formed in each case between the first plane (Eb) and the second plane (Eu1; Eu2) are approximately equal.

4. Recirculating element guide according to Claim 2, **characterized in that** the angles (y1; y2) are less than 90°, preferably between 5° and 45°.

5. Recirculating element guide according to Claim 2, **characterized in that** cover-type components (14) are provided for redirecting the rolling elements in the various rolling element tracks (Rb and Ru respectively).

6. Recirculating element guide according to Claim 1, **characterized in that** the plate-shaped component (12) has a curved or angled form in cross section.

7. Recirculating element guide according to Claim 1, **characterized in that** the contact surfaces (120) of the plate-shaped component (12) and the contact surfaces (21) of the carriage-type part (2) are in each case approximately at right angles to one another.

8. Linear guide unit with a carriage-type component (2) and a rail-type component (3) and with recirculating element guides (1) for rolling elements (13) according to Claim 1, **characterized in that** the carriage-type component (2) has a plurality of approximately perpendicularly projecting legs (23) which fit at least part way around the rail-type component (3), for which purpose the recirculating element guides (1) are arranged between the carriage-type component (2) and the rail-type component (3), and, for setting a preload, it being possible for shaft-shaped components (9) to be pressed into groove-shaped recesses (24) in the legs (23) of the carriage-type component (2) and the recesses (24) having a tapering aperture cross section such that, when the shaft-shaped components (9) are pressed into the groove-shaped recesses (24), one part of the legs (23) in each case undergoes a deflection which increases the preload.

9. Linear guide unit according to Claim 8, **characterized in that** both the carriage-type component (2) and the rail-type component (3) have recesses (20 and 30 respectively), into which the component (10) of the respective recirculating element guide (1) for the rolling elements (13) at least partially projects.

## Revendications

1. Guidage en circuit fermé (1) pour des éléments de roulement (13) à utiliser dans une unité de guidage linéaire composée d'une partie de type chariot (2, 6, 8) et d'une partie de type rail (3, 5, 7), avec - en fonctionnement normalement prévu - deux rangées d'éléments de roulement chargées (Rb) et deux rangées d'éléments de roulement non chargées (Ru), dans lequel le guidage en circuit fermé (1) est réalisé en une unité pré-assemblée et contient au moins une pièce (10) pour les éléments de roulement (13), qui est un composant d'une cage de palier et qui guide au moins partiellement - en fonctionnement normalement prévu - aussi bien les rangées d'éléments de roulement chargées (Rb) que les rangées d'éléments de roulement non chargées (Ru), dans lequel la cage de palier présente une autre partie (11) et la pièce (10) pour le guidage des rangées d'éléments de roulement chargées et non chargées (Rb, Ru) présente un chenal de guidage (100) et l'autre partie (11) présente un chenal de guidage (110), qui se complètent en un canal de guidage tubulaire, **caractérisé en ce que** l'autre partie (11) présente une pièce centrale (111) environ dans la région d'une ligne centrale (M) du guidage en circuit fermé (1), dans lequel deux canaux de guidage pour les éléments de roulement chargés (13) sont formés entre la pièce centrale (111) et la pièce (10) pour le guidage des rangées d'éléments de roulement chargées et non chargées (Rb, Ru), dans lequel une pièce allongée en forme de plaque (12) est fixée à la pièce (10) pour le guidage des rangées d'éléments de roulement chargées et non chargées (Rb, Ru), qui comporte deux pistes de circulation des éléments de roulement (121) et au moins deux faces de contact (120), qui peuvent être mises en contact actif avec des faces de contact (21) de la partie de type chariot (2, 6, 8) de l'unité de guidage linéaire, et dans lequel la pièce (10) pour le guidage des rangées d'éléments de roulement chargées et non chargées (Rb, Ru) présente des moyens d'étanchéité (101) pour l'appui sur la partie de type rail (3) de l'unité de guidage linéaire.

2. Guidage en circuit fermé selon la revendication 1, **caractérisé en ce qu'**un premier plan (Eb) est formé par les points centraux des deux rangées d'éléments de roulement chargées (Rb) et chaque fois un autre plan (Eu1; Eu2) est formé par les points centraux de chaque rangée d'éléments de roulement chargée (Rb) et de la rangée d'éléments de roulement non chargée (Ru) respectivement associée à celle-ci, dans lequel le premier plan (Eb) forme respectivement avec les autres plans (Eu1; Eu2) un angle déterminé (γ1, γ2).

3. Guidage en circuit fermé selon la revendication 2, **caractérisé en ce que** les angles (γ1; γ2) formés respectivement entre le premier plan (Eb) et le deuxième plan (Eu1; Eu2) sont sensiblement égaux.

4. Guidage en circuit fermé selon la revendication 2, **caractérisé en ce que** les angles (γ1, γ2) sont inférieurs à 90°, et se situent de préférence entre 5° et 45°.

5. Guidage en circuit fermé selon la revendication 2, **caractérisé en ce qu'**il est prévu des pièces de type couvercle (14) pour la déviation des éléments de roulement dans les différentes pistes d'éléments de roulement (Rb ou Ru).

6. Guidage en circuit fermé selon la revendication 1, **caractérisé en ce que** la pièce en forme de plaque (12) présente en section transversale une forme incurvée ou coudée.

7. Guidage en circuit fermé selon la revendication 1, **caractérisé en ce que** les faces de contact (120) de la pièce en forme de plaque (12) et les faces de contact (21) de la partie de type rail (2) sont chaque fois sensiblement perpendiculaires l'une à l'autre.

8. Unité de guidage linéaire avec une partie de type chariot (2) et une partie de type rail (3) ainsi qu'avec des guidages en circuit fermé (1) pour des éléments de roulement (13) selon la revendication 1, **caractérisée en ce que** la partie de type chariot (2) présente plusieurs branches (23) saillantes sensiblement perpendiculairement, qui entourent au moins partiellement la partie de type rail (3), les guidages en circuit fermé (1) étant à cet effet disposés entre la partie de type chariot (2) et la partie de type rail (3), et dans laquelle, pour le réglage d'une précontrainte, des pièces de forme ondulée (9) peuvent être enfoncées dans des évidements en forme de rainures (24) de la partie de type chariot (2) dans les branches (23) de celle-ci et les évidements (24) présentent une section transversale d'ouverture décroissante, de telle manière que, lors de l'enfoncement des pièces de forme ondulée (9) dans les évidements en forme de rainures (24), une partie des branches (23) subisse chaque fois une déviation qui augmente la précontrainte.

9. Unité de guidage linéaire selon la revendication 8, **caractérisée en ce qu'**aussi bien la partie de type chariot (2) que la partie de type rail (3) présente des évidements (20 ou 30), dans lesquels la pièce (10) du guidage en circuit fermé respectif (1) pour les éléments de roulement (13) pénètre au moins partiellement.
